# EUROPEAN PATENT APPLICATION

(11) **EP 4 517 559 A1**
(43) Date of publication of application: **05.03.2025**
(21) Application number: 23810926.8
(22) Date of filing: 17.05.2023
(51) Int. Cl.: G06F 16/958

(54) **METHOD AND APPARATUS FOR WORK REPOSTING, AND DEVICE AND STORAGE MEDIUM**

(30) Priority: 25.05.2022 CN 202210580711
(71) Applicant: BEIJING BYTEDANCE NETWORK TECHNOLOGY CO., LTD., Beijing 100041 (CN)
(72) Inventor: WANG, Jinyi, Beijing 100028 (CN); CHEN, Yue, Beijing 100028 (CN); QIU, Hao, Beijing 100028 (CN)
(74) Representative: Dentons UK and Middle East LLP
(86) International application number: PCT/CN2023/094860
(87) International publication number: WO 2023/226853

(57) **Abstract**

A method, apparatus, device and storage medium for reposting a post is provided. In the method for presenting the post, a request for presenting a comment area for the post is received from a first user, and the comment area is then presented, where if the post is reposted, the comment area includes at least one repost comment related to the reposting of the post.

## Description

This application claims the benefit of CN Patent Application No. 202210580711.5 filed on May 25, 2022, entitled "METHOD, APPARATUS, DEVICE AND STORAGE MEDIUM FOR REPOSTING a post", which is hereby incorporated by reference in its entirety.

### TECHNICAL FIELD

Embodiments of the present disclosure generally relate to the computer field and specifically, to a method, apparatus, device and computer-readable storage medium for reposting.

### BACKGROUND

More and more applications are currently designed to provide various services to users. Users may perform various operations on applications. For example, users can create and publish posts in content sharing applications, such as text, video, images, image collections, sound, and other multimedia content. In addition, users can perform various operations such as browsing, commenting, reposting, and message interaction in applications. It is quite important to provide users with convenient approaches for such operations, such as efficiently reposting and commenting the posts.

### SUMMARY

In a first aspect of the present disclosure, there is provided a method of presenting a post. The method comprises: receiving, from a first user, a request for presenting a comment are for the post; and presenting the comment area, wherein if the post is reposted, the comment area includes at least one repost comment related to reposting of the post.

In a second aspect of the present disclosure, there is provided a method of reposting a post. The method comprises: in response to the post being reposted by a second user, generating a repost comment related to reposting of the second user for presenting in a comment area; and presenting, in a user interface for presenting the post, a first indication that the second user reposted the post.

In a third aspect of the present disclosure, there is provided an apparatus for presenting a post. The apparatus comprises: a request receiving module configured to receive, from a first user, a request for presenting a comment for the post; and a comment presenting module configured to present the comment area, wherein if the post is reposted, the comment area includes at least one repost comment related to reposting of the post.

In a fourth aspect of the present disclosure, there is provided an apparatus for reposting a post. The apparatus comprises: a comment generating module configured to, in response to the post being reposted by a second user, generate a repost comment related to reposting of the second user for presenting in a comment area; and an indication presenting module configured to present a first indication that the second user reposted the post, in a user interface for presenting the post.

In a fifth aspect of the present disclosure, there is provided an electronic device. The device comprises: at least one processing unit; and at least one memory coupled to the at least one processing unit and storing instructions to be executed by the at least one processing unit. The instructions, when executed by the at least one processing unit, cause the device to perform a method according to the first aspect or the second aspect.

In a sixth aspect of the present disclosure, there is provided a computer-readable storage medium storing a computer program thereon. The computer program, when executed by a processor, implements a method according to the first aspect or the second aspect.

It should be understood that the Summary is neither intended to identify key features or essential features of the present disclosure, nor is it intended to be used to limit the scope of the present disclosure. Other features of the present disclosure will be readily understood from the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference numbers represent denote the same or similar elements, where:
FIG. 1 illustrates a schematic diagram of an example environment in which embodiments of the present disclosure can be implemented;
FIG. 2 illustrates a flowchart of a process for presenting a post according to some embodiments of the present disclosure;
FIG. 3A illustrates a schematic diagram of an example user interface for presenting a comment area according to some embodiments of the present disclosure;
FIG. 3B illustrates a schematic diagram of a comment area displayed in a folded form according to some embodiments of the present disclosure;
FIG. 4 illustrates a flowchart of a process for reposting a post according to some embodiments of the present disclosure;
FIG. 5 illustrates a schematic diagram of an example user interface for presenting a description of the functionality of a repost comment according to some embodiments of the present disclosure;
FIGS. 6A and 6B illustrate a schematic diagram of an example user interface for presenting repost prompts of a post according to some embodiments of the present disclosure;
FIGS. 7A and 7B each illustrate a schematic diagram of an example user interface for adding a repost comment according to some embodiments of the present disclosure;
FIG. 8 illustrates a schematic diagram of an example user interface for presenting a comment area after an author of a post disables the comment function according to some embodiments of the present disclosure,
FIG. 9 illustrates a block diagram of an apparatus for presenting a post according to some embodiments of the present disclosure;
FIG. 10 illustrates a block diagram of an apparatus for reposting a post according to some embodiments of the present disclosure; and
FIG. 11 illustrates a block diagram of a device in which a plurality of embodiments of the present disclosure can be implemented.

### DETAILED DESCRIPTION OF EMBODIMENTS

Embodiments of the present disclosure will be described in more detail with reference to the accompanying drawings, in which some embodiments of the present disclosure have been illustrated. However, it should be understood that the present disclosure can be implemented in various manners, and thus should not be construed to be limited to embodiments disclosed herein. On the contrary, those embodiments are provided for the thorough and complete understanding of the present disclosure. It should be understood that the drawings and embodiments of the present disclosure are merely for the purpose of illustration, rather than limiting the protection scope of the present disclosure.

As used herein, the term "post(s)" refers to multimedia content created by users, including text, sound, graphics, images, animations and videos, etc.

As used herein, the term "repost comment" refers to a comment related to reposting actions. Such comments can be any content provided by a user and obtained while the user is reposting or default content automatically generated when the user has no input. As used herein, the term "regular comment" refers to a comment provided by a user while viewing a post instead of reposting the post.

In the description of the embodiments of the present disclosure, the term "include" and its variants are to be read as open terms that mean "include, but not limited to." The term "based on" is to be read as "based at least in part on." The terms "one embodiment" or "the embodiment" are to be read as "at least one embodiment." The term "some embodiments" is to be read as "at least some embodiments." Other definitions, either explicit or implicit, may be included below.

It may be understood that data involved in the present technical solution (including but not limited to the data itself, the acquisition or use of the data) should comply with requirements of corresponding laws and regulations and relevant rules.

It may be understood that, before using the technical solutions disclosed in various implementation of the present disclosure, the user should be informed of the type, scope of use, and use scenario of the personal information involved in the present disclosure in an appropriate manner in accordance with relevant laws and regulations, and the user's authorization should be obtained.

For example, in response to receiving an active request from the user, prompt information is sent to the user to explicitly inform the user that the requested operation will need to acquire and use the user's personal information. Therefore, the user may independently choose, according to the prompt information, whether to provide the personal information to software or hardware such as electronic devices, applications, servers, or storage media that perform operations of the technical solutions of the present disclosure.

As an optional but non-limiting implementation, in response to receiving an active request from the user, the way of sending prompt information to the user, for example, may include a pop-up window, and the prompt information may be presented in the form of text in the pop-up window. In addition, the pop-up window may also carry a selection control for the user to choose "agree" or "disagree" to provide the personal information to the electronic device.

It may be understood that the above process of notifying and obtaining the user authorization is only illustrative and does not limit the implementation of the present disclosure. Other methods that satisfy relevant laws and regulations are also applicable to the implementation of the present disclosure.

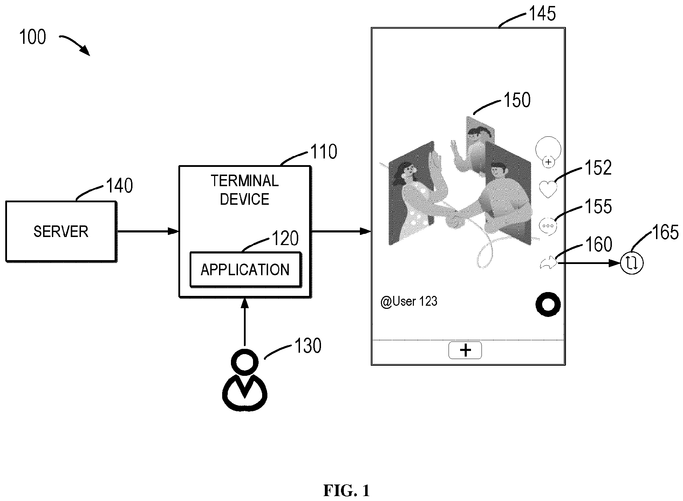

FIG. 1 illustrates a schematic diagram of an example environment 100 in which the embodiments of the present disclosure can be implemented.

In the example environment 100, an application 120 is installed in a terminal device 110. A user 130 may interact with the application 120 via the terminal device 110 and/or a device attached to the terminal device 110. The application 120 may be a content sharing application that can provide the user 130 with services related to posts in the form of multimedia content, such as post browsing, commenting, reposting, creating (e.g., photographing and/or editing), publishing, etc.

The terminal device 110 may be any type of mobile, fixed or portable terminal, including a mobile phone, a desktop computer, a laptop computer, a notebook computer, a netbook computer, a tablet computer, a media computer, a multimedia tablet, a Personal Communication System (PCS) device, a personal navigation device, a Personal Digital Assistant (PDA), an audio/video player, a digital camera/video, a positioning device, a television receiver, a radio broadcast receiver, an electronic book device, a gaming device or any other combination of the foregoing, including accessories and peripherals of these devices, or any other combination thereof. In some embodiments, the terminal device 110 can support any type of interfaces for the user (such as a "wearable" circuit, and the like).

In some embodiments, the terminal device 110 communicates with a server 140 to provide services of the application 120. The server 140 is various types of computing systems/servers that can provide computing capability, including, but not limited to, a mainframe, an edge computing node, a computing device in a cloud environment, etc.

It should be understood that the structure and functionality of the environment 100 have been described only for the purpose of illustration, rather than limiting the scope of the present disclosure.

In the environment 100, the user 130 is viewing a post 150 created by a user 123 on a user interface 145 provided by the terminal device 110. In this example, the application 120 is a video sharing application, and the post 150 is a video. The user 130 may like the post 150 by clicking on a like control 152 and may view comments on the post 150 by clicking on a comment area control 155. The user 130 may further share (e.g., repost) the post 150 by clicking on a share control 160. For example, after the user 130 clicks on the share control 160, a repost control 165 may be presented on the user interface 145 for the user 130 to repost the post 150.

In reposting, it is desirable to conveniently, quickly and flexibly add repost comments. Moreover, it is desirable to conveniently and quickly view repost comments and interact with comment initiators.

Embodiments of the present disclosure propose an interaction scheme for posts. In the scheme, if a post viewed by a user has been reposted, then at least one repost comment related to the repost of the post is presented in a comment area of the post. Accordingly, if the post is reposted by another user, a repost comment related to the reposting is generated for presenting in the comment area. For the purpose of discussion, in some embodiments of the present disclosure, a user viewing a repost comment is referred to as a "first user," and a user reposting a post is referred to as a "second user."

In this way, reposting-related information may be presented and viewed in the comment area, so that users may conveniently and quickly access and view repost comments. On the other hand, users may interact with reposters more easily, which simplifies user operation and improves user experience.

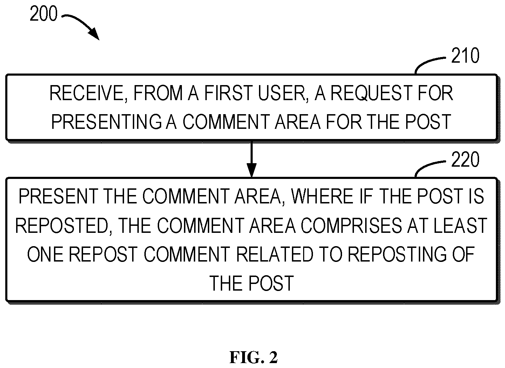

FIG. 2 illustrates a flowchart of a process 200 for presenting a post according to some embodiments of the present disclosure. The process 200 may be implemented at the terminal device 110. For the sake of discussion, the process 200 will be described in connection with the environment 100 in FIG. 1.

At block 210, a request for presenting a comment area for a post (e.g., the post 150 in FIG. 1) is received from a first user (e.g., the user 130 in FIG. 1). For example, in response to the first user clicking on the comment area control 155 as shown in FIG. 1, it is determined that the first user requests to present the comment area. The first user may send a request for presenting the comment area in other ways, and a relevant embodiment will be further described below.

At block 220, the comment area is presented, where if the post has been reposted, the comment area includes at least one repost comment related to the reposting of the post. As an example, the repost comment may include user input content related to the reposting of the post, for example, including user input content (also referred to as a "user input comment") obtained during the reposting of the post. The user input comment may further be input after the user reposts the post. For example, the user may input a repost comment in the comment area after reposting the post.

As another example, the repost comment may further include a default repost comment generated without a user input. The default repost comment may include any appropriate default text. For example, it may be descriptive information indicating that the post has been reposted, e.g., "reposted this post."

In this way, the first user may enter the comment area to learn the repost situation of the viewed post, and may interact with the reposter in the comment area, making the interaction between users more convenient.

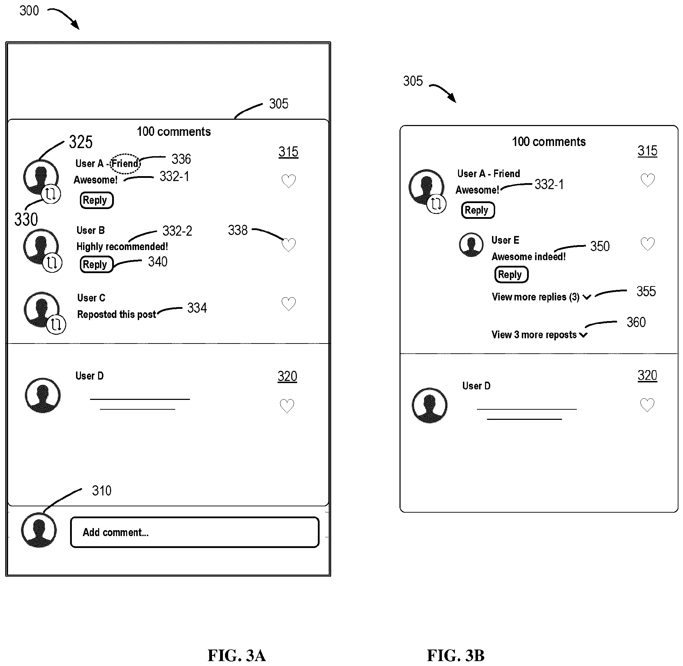

FIG. 3A illustrates an example user interface 300 for presenting a comment area according to some embodiments of the present disclosure.

In this example, in response to a request for presenting a comment area from a first user (e.g., a user 310 in FIG. 3A), a comment area 305 is presented in the user interface 300, where a first comment area 315 is dedicated to displaying repost comments, and a second comment area 320 is dedicated to displaying regular comments. The two comment areas 315 and 320 are separate from each other. By showing repost comments and regular comments in separate areas, the user may learn the repost situation of the post more conveniently and interact with reposters more easily.

In some embodiments, to further highlight the repost comment, the repost comment is displayed on the top of the comment area 305. For example, as shown in FIG. 3A, the first comment area 315 is above the second comment area 320. A repost icon 330 may also be shown in the lower right corner of an avatar of a repost user 325 to further highlight the repost comment.

In the example shown in FIG. 3A, three repost comments are shown in the first comment area 315, including repost comments 332-1 and 332-2 inputted by User A and User B, which are collectively referred to as user input comments 332, and a default repost comment 324, e.g., "Reposted this post," generated for User C in the case that User C inputs no comment.

In some embodiments, Users A, B and C related to the comments 332-1, 332-2 and 334 have associations with the first user. For example, the first user may have a follow relationship with Users A, B and/or C in a social network, e.g., a mutual follow friend relationship. Alternatively, or in addition, the first user may have a one-way follow relationship with Users A, B and/or C (e.g., a following acquaintance or a followed acquaintance). For example, Users A, B and/or C may follow the first user, or the first user may follow Users A, B and/or C. Further, Users A, B and/or C may have other associations with the first user

Thus, if a certain user reposts a certain post, the repost may be seen by associated users when viewing the post, and they may further interact with the repost user. Thus, user interaction may be provided with convenience, and user experience is further improved.

In some embodiments, if the comment area 305 includes a plurality of repost comments, the plurality of repost comments may be ranked based on the repost comments including or excluding user input content and/or based on the intimacy between users related to the repost comments and the first user. For example, in the example shown in FIG. 3A, the comments 332-1 and 332-2 contain content input by Users A and B and thus are ranked above the default repost comment 334. In addition, User A and the first user are in friend relationship, while User B and the first user are in one-way follow relationship. For example, as shown in FIG. 3A, a fiend tag 336 is shown after the name of User A. Accordingly, the comment 332-1 of User A is ranked above the comment 332-2 of User B. Thus, it is more convenient for the user to interact with friends or acquaintances.

In some embodiments, the user input comment 332 may be counted in the number of comments for the post 150, while the default repost comment 324 may have the attribute of non-count in the number of comments for the post 150. Thus, statistics on comments initiated by users may be made effectively.

In some embodiments, similar to the regular comment, the repost comment may support likes and replies. For example, in FIG. 3A, each of the comments 332-1, 332-2 and 334 is provided with a like control 338 for the first user to like a corresponding comment. In addition, a reply control 340 is arranged below the comments 332-1 and 332-2 for the first user to reply to a corresponding comment. Considering that the default repost comment 334 is automatically generated instead of being inputted by the user, in some embodiments, the default repost comment 334 may have the attribute of non-reply. As shown in FIG. 3A, the default repost comment 334 does not support a reply, so the reply control 340 is not shown. Thus, the display space of the user interface may be efficiently used.

It should be understood that the user interface 300 in FIG. 3A and other user interface and display interface in other figures to be described are merely examples, and various designs may exist in practice. For example, various graphical elements and/or controls in the interface can may different arrangements and different visual representations, one or more elements and/or controls may be removed or replaced, and one or more other elements and/or controls may exist. Furthermore, the interface may contain any appropriate text content. Embodiments of the present disclosure are not limited in this regard.

In some embodiments, to further sufficiently utilize the limited display space in the user interface, reposted comments may be displayed in a folded form in the comment area.

FIG. 3B illustrates a comment area 305 displayed in a folded form according to some embodiments of the present disclosure.

In this example, two comments, including the repost comment 332-1 and its reply comment 350, are displayed in a pinned area of the first comment area 315. Other comments and replies are displayed in a folded form. For example, regarding the repost comment 332-1 of User A, only the reply comment 350 from User E is displayed, and at least 3 other reply comments are displayed in a folded form. Every time the first user clicks on a reply unfold control 360, 3 reply comments may be displayed.

A repost unfold control 360 is further arranged in the first comment area 315 in FIG. 3B. Every time the user clicks on the control, 3 repost comments with replies may be unfolded.

It should be understood that the numbers of displayed and folded comments shown in FIG. 3B are merely illustrative and not limited. Depending on the layout of the interface, any numbers of repost comments and replies may be displayed. Every time the reply unfold control 355 and the repost unfold control 360 are clicked on, any number of information may be displayed.

Some embodiments have been described in connection with FIGS. 1, 2, 3A and 3B with respect to the first user viewing repost comments related to the reposting of the post 150 in the comment area. Now, some embodiments related to the reposting of the post 150 by the second user will be discussed below.

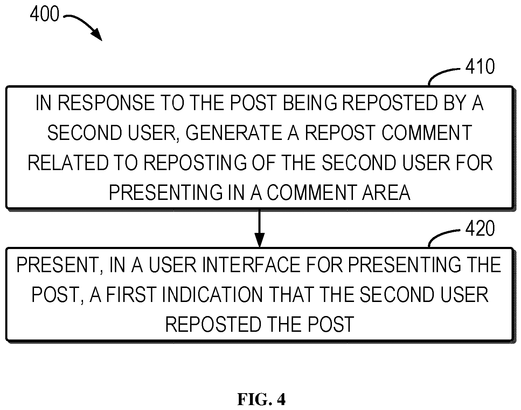

FIG. 4 illustrates a flowchart of a process 400 for reposting a post according to some embodiments of the present disclosure. The process 400 may be implemented at the terminal device 110.

At block 410, in response to the post 150 being reposted by a second user (e.g., the user 130 in FIG. 1), a repost comment related to reposting by the second user is generated for presenting in a comment area (e.g., the comment area 305 shown in FIGS. 3A and 3B). For example, the second user may click on the share control 160 in FIG. 1 and then click on the repost control 165 presented thereby, so as to repost the post 150. The generated comment may be a default repost comment, e.g., the second user "Reposted this post."

In some embodiments, if the second user uses the reposting function for the first time, then a description of the functionality of repost comments may be displayed to the second user. For example, a prompt about adding the repost comment can be displayed. For compliance purpose, it is possible to also present an indication that the repost comment will be publicly visible..

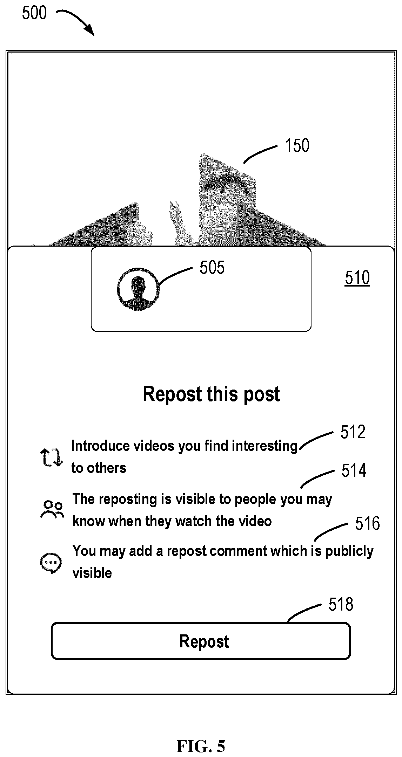

FIG. 5 illustrates an example user interface 500 for presenting a description of the functionality of repost comments according to some embodiments of the present disclosure.

As shown in FIG. 5, if the second user (e.g., a user 505 in FIG. 5) never uses the reposting function previously, then when the second user reposts the post 150, a pop-up window 510 is presented to present a relevant introduction of the reposting function. For example, if the second user has not seen the pop-up window 510, the pop-up window 510 is displayed. If the second user has used the reposting function or seen the pop-up window 510, then the window 510 is no longer used, thereby simplifying the operation of reposting.

In the pop-up window 510, a description 512 of the reposting function may be included, for example, "Introduce videos you find interesting to others." Alternatively, or in addition, a description 514 of the functionality of the repost prompt may be included, for example, "The reposting is visible to people you may know when they watch the video." Alternatively, or in addition, a description 516 of the functionality of the repost comment may further be included, for example, "You may add a repost comment which is publicly visible." After the second user clicks on a reposting confirm control 518, the post 150 may be reposted.

Next, still with reference to FIG. 4, at block 420, an indication (referred to as a "first indication") that the second user reposted the post 150 is presented in the user interface of presenting the post 150. Thus, while displaying the post 150 to the user, the user may also be informed that the repost is completed.

In some embodiments, if at least a further user (referred to as a "third user") reposts the post 150, an indication (referred to as a "second indication") that the at least a third user reposted the post 150 is further presented in the user interface. Therefore, it is possible to more conveniently and quickly display the reposting of the post.

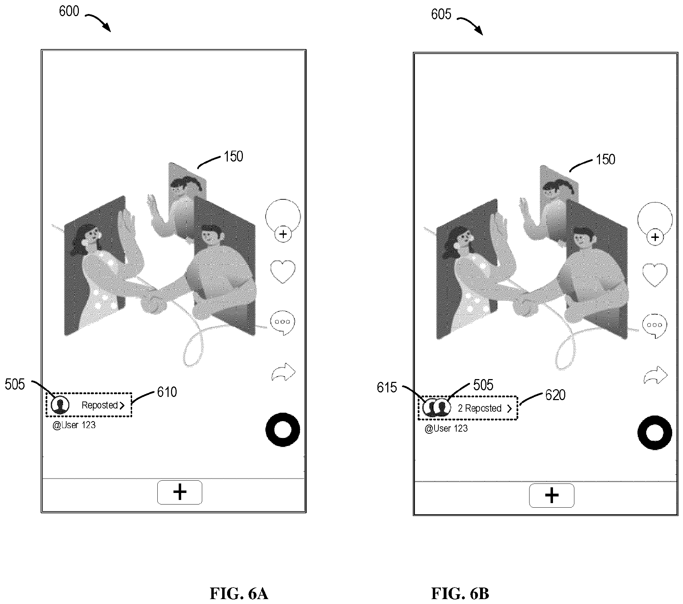

FIGS. 6A and 6B illustrate example user interfaces 600 and 605 of presenting indications of reposting of a post according to some embodiments of the present disclosure.

In FIG. 6A, after the second user (e.g., the user 505) reposts the post 150, a first indication 610 of "reposted" of the second user is presented in the user interface 600 of presenting the post 150.

In the example shown in FIG. 6B, the third user (e.g., a user 615) also reposts the post 150. In the user interface 605 of presenting the post 150, a second indication 620of "2 reposted" of the second user (e.g., the user 505) and the third user (e.g., the user 615).

In some embodiments, in response to a predetermined operation (referred to as a "first predetermined operation") of the second user on the first indication, it is to jump to the comment area of the post 150 to display repost comments of the post 150. The first predetermined operation may include any appropriate operation, e.g., clicking, swiping, touching or approaching, etc. Thus, the predetermined operation of the second user on the first indication may also be considered as a request of the second user for presenting the comment area.

Still considering the example shown in FIG. 6A, if the second user (e.g., the user 505) clicks on the first indication 610, it is to jump to the comment area (e.g., the comment area 305 shown in FIGS. 3A and 3B) of the post 150 to display related comments of the post 150, including repost comments and regular comments.

In some embodiments, the second indication 620 shown in FIG. 6B also supports the jump to the comment area. For example, if the second user clicks on the second indication 620 in FIG. 6B, it is to directly enter the comment area of the post 150.

In this way, it is possible to enter the comment area not only through the comment area control 155 shown in FIG. 1 but also through the first indication 610 shown in FIG. 6A and the second indication 620 shown in FIG. 6B. Therefore, more flexible operation approaches are provided for users, improving user experience.

In some embodiments, to further simplify the process of adding a repost comment, after the second user reposts the post 150, an interface element for adding a repost comment may further be presented in the user interface, for the second user to add a repost comment related to the reposting. In some embodiments, in response to a predetermined operation (referred to as a "second predetermined operation") of the second user on the interface element, an interface area for inputting a comment is presented. Similar to the first predetermined operation on the first indication about the reposting, the second predetermined operation may also include clicking, swiping, touching, approaching and other any appropriate operation.

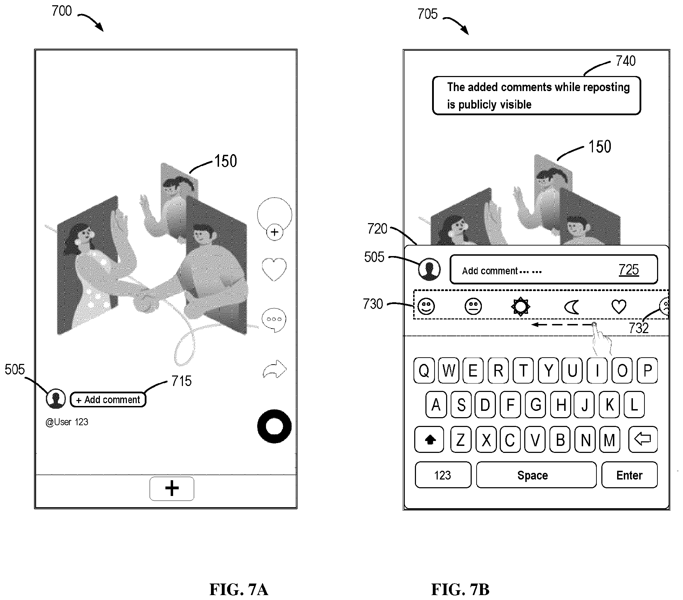

FIGS. 7A and 7B show example user interfaces 700 and 705 for adding a repost comment according to some embodiments of the present disclosure.

In the user interface shown in FIG. 7A, an interface element 715 for adding a repost comment is presented. If the second user (e.g., the user 505) clicks on the interface element 715, it is to jump to the user interface 705 shown in FIG. 7B, where an interface element 720 for inputting a comment is displayed. The second user may input a repost comment in an input box 725 of the interface area 720.

In FIG. 7B, an emoticon sequence 730 is shown below the input box 725. In this example, a emoticon 732 at the end of the sequence is not completely shown. In response to a predetermined operation (referred to as a "third predetermined operation") of the second user on the emoticon sequence 730, at least one additional emoticon may be presented. The third predetermined operation may include clicking and swiping, e.g., left swiping, right swiping, upward swiping, downward swiping, or non-horizontal or vertical swiping, and any other appropriate operation.

In this example, if the second user clicks on the area where the emoticon sequence 730 is located and then swipes in a predetermined direction (e.g., to the left), emoticon(s) which is not currently shown may be displayed. As such, more emoticons may be found by performing a predetermined operation, which saves the limited display space of the user interface.

In some embodiments, for compliance purpose, a prompt 740 of "The added comments while reposting is publicly visible" may be displayed when the second user enters the interface area 720 to input comments through the interface element 715 for the first time.

In some embodiments, after the second user reposts the post 150, the first indication that the post 150 is reposted by the second user and the interface elements for adding repost comments may be displayed alternately in the user interface for presenting the post 150. For example, after the repost of the second user succeeds, first the user interface 600 as shown in FIG. 6A is displayed, and then the user interface 700 as shown in FIG. 7A is displayed, and subsequently they are displayed alternately.

The indication and the interface elements used to add repost comments can be displayed alternately so that the user can understand the reposting and can go to the comment area or add repost comments when necessary. In this way, the user can operate efficiently and flexibly, providing the user with convenience.

In some embodiment, the repost comment of the second user may be deleted. For example, if the second user clicks on the repost comment for more than a predetermined time length (also referred to as a "long press" operation), the repost and the corresponding comment may be deleted. Thus, the repost operation of the user may become more flexible, and the user may effectively manage the repost operation, which improves user experience. In some embodiments, a default repost comment of other persons does not support the "long press" operation, and cannot be deleted, replied, copied or reported by through "long press."

In some embodiments, the author of the post 150 may set the comment permission. For example, the user 123 creating the post 150 may disable the comment function for the post 150. In this case, comment adding may not be supported while reposting the post 150. For example, the user interface 700 including the interface element 715 for adding repost comments as shown in FIG. 7A is not presented. At this point, the user interfaces 600 and 605 including the first indication and the second indication that indicate the post 150 is reposted as shown in FIGS. 6A and 6B may still be displayed.

Alternatively, or in addition, where the author disables the comment function, a default repost comment may be generated and displayed in the comment area during the repost of the post 150.

In some embodiments, if the author disables the comment function after the post 150 is reposted, then regular comments become unviewable. At this point, repost comments containing user input content may be filtered, and default repost comments may be displayed instead. In the case that the author sets the comment permission to be viewable and non-addable, user input content may not be filtered but normally displayed along with regular comments.

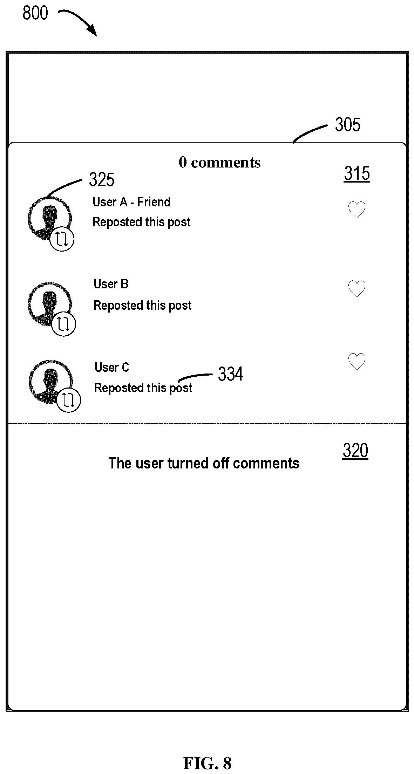

FIG. 8 illustrates an example user interface 800 for presenting the comment area 305 after the user 123 creating the post 150 disables the comment function according to some embodiments of the present disclosure.

In this example, after the post 150 is reposted, the user 123 disables the comment function. In this case, as shown in FIG. 8, in the first comment area 315 for presenting repost comments, the content input by User A and User B as shown in the user interface 300 in FIG. 3A is replaced by a default repost comment, e.g., "Reposted this post." Regular comments are no longer displayed in the second comment area, and "The user turned off comments" is shown instead. In this way, the author of the post may perform effective management on comment operations of the post.

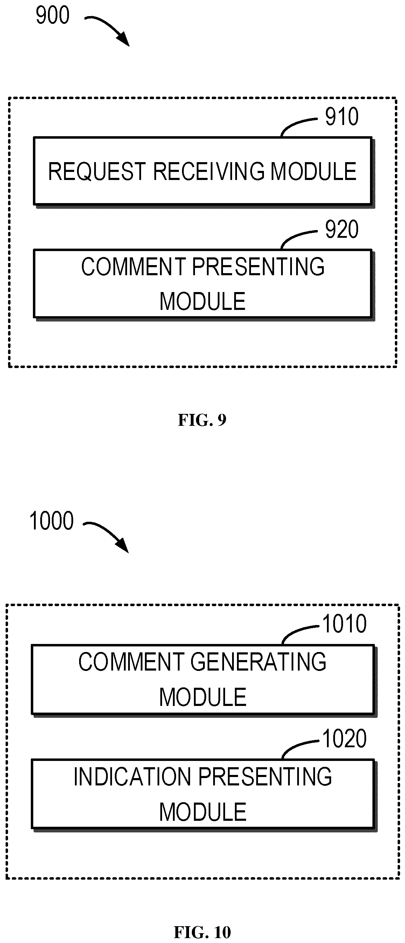

FIG. 9 illustrates a schematic structural block diagram of an apparatus 900 for presenting a post according to some embodiments of the present disclosure. The apparatus 900 may be implemented at or included in the terminal device 110. Various modules/components of the apparatus 900 may be implemented by hardware, software, firmware or any combinations thereof.

As shown, the apparatus 900 comprises a request receiving module 910 and a comment presenting module 920. The request receiving module 910 is configured to receive, from a first user, a request for presenting a comment area for the post. The comment presenting module 920 is configured to present the comment area, where if the post is reposted, the comment area comprises at least one repost comment related to reposting of the post.

In some embodiments, the comment presenting module 920 may further be configured to present a first comment area dedicated to displaying the at least one repost comment, and present a second comment area dedicated to displaying regular comments for the post. The first comment area and the second comment area are separate from each other.

In some embodiments, the at least one repost comment may comprise user input content for the reposting of the post, and/or a default repost comment generated without a user input. In some embodiments, the default repost comment may have at least one of the following attributes: non-reply, and/or non-count in the number of comments on the post. In some embodiments, an initiator of the at least one repost comment may have an association with the first user

In some embodiments, the comment presenting module 920 may further be configured to, in response to determining that the comment area comprises a plurality of repost comments, rank the plurality of repost comments based on at least one of: a repost comment including or excluding user input content, and the intimacy between a related user of a repost comment and the first user.

FIG. 10 illustrates a structural block diagram of an apparatus 1000 for reposting a post according to some embodiments of the present disclosure. The apparatus 1000 may be implemented at or included in the terminal device 110. Various modules/components in the apparatus 1000 may be implemented by hardware, software, firmware or any combinations thereof.

As shown, the apparatus 1000 comprises a comment generating module 1010 and an indication presenting module 1020. The comment generating module 1010 is configured to, in response to the post being reposted by a second user, generate a repost comment related to reposting of the second user for presenting in a comment area. The indication presenting module 1020 is configured to present, in a user interface for presenting the post, a first indication that the second user reposted the post.

In some embodiments, a second indication that at least a third user reposted the post is presented in the user interface. The second user and the third user have an association.

In some embodiments, the apparatus 1000 may further comprise a jump module configured to, in response to a first predetermined operation of the second user on the first indication, jump to the comment area to display the repost comment.

In some embodiments, the apparatus 1000 may further comprise a comment adding module configured to present, in the user interface, an interface element for adding a repost comment for the second user to add a repost comment related to the repost.

In some embodiments, the apparatus 1000 may further comprise a comment inputting module configured to, in response to a second predetermined operation of the second user on the interface element, present an interface area for inputting comments.

In some embodiments, the apparatus 1000 may further comprise a emoticon presenting module configured to, in response to a third predetermined operation of the second user on an emoticon sequence in the interface area, present at least one additional emoticon. The last emoticon in the emoticon sequence is incompletely displayed.

It should be understood that the features and effects of the processes 200 and 400 discussed with reference to FIGS. 1 to 8 are also applicable to the apparatuses 900 and 1000, and will not be repeated here. In addition, modules included in the apparatus 900 and/or apparatus 1000 may be implemented in various ways, including software, hardware, firmware or any combination thereof. In one embodiment, one or more modules may be implemented using software and/or firmware, for example, machine-executable instructions stored on the storage medium. In addition to or instead of machine-executable instructions, parts or all of the modules in the apparatus 900 and/or apparatus 1000 may be implemented, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

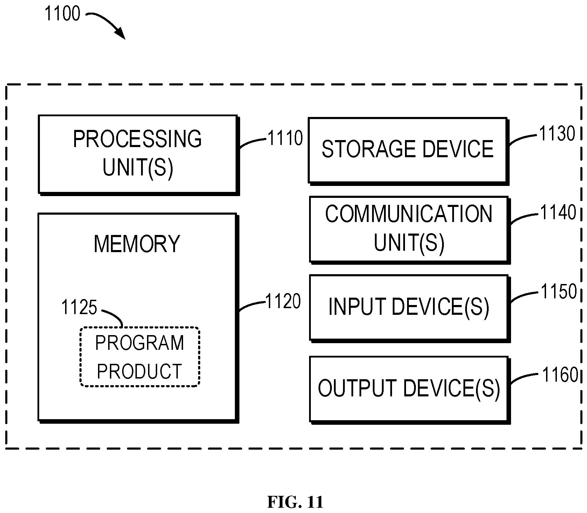

FIG. 11 illustrates a block diagram of an electronic device 1100 in which one or more embodiments of the present disclosure may be implemented. It should be understood that the electronic device 1100 shown in FIG. 11 is merely illustrative and does not constitute any limitation on the functionality and scope of the embodiments described herein. The electronic device shown in FIG. 11 may be used to implement the terminal device 110 in FIG. 1

As shown in FIG. 11, the electronic device 1100 is in the form of a general-purpose computing device. Components of the electronic device 1100 may include, without limitation to, one or more processors or processing units 1110, a memory 1120, a storage device 1130, one or more communication units 1140, one or more input devices 1150 as well as one or more output devices 1160. The processing unit 1110 may be a real or virtual processor and can execute various processing according to programs stored in the memory 1120. In a multi-processor system, a plurality of processing units execute in parallel computer-executable instructions to increase the parallel processing capability of the electronic device 1100.

The electronic device 1100 usually includes various computer storage media. Such media may be any available media accessible by the electronic device 1100, including but not limited to, volatile and non-volatile media, or removable and non- removable media. The memory 1120 may be a volatile memory (for example, a register, cache, Random Access Memory (RAM)), non-volatile memory (for example, a Read-Only Memory (ROM), Electrically Erasable Programmable Read-Only Memory (EEPROM), a flash memory), or any combination thereof. The storage device 1130 may be any detachable or non-detachable medium and may include machine-readable medium such as a flash memory drive, a magnetic disk or any other media that can be used for storing information and/or data (e.g., training data for training) and are accessible within the electronic device 1100.

The electronic device 1100 may further include additional detachable/non-detachable, volatile/non-volatile memory media. Although not shown in FIG. 11, there may be provided a disk drive for reading from or writing into a detachable and non-volatile disk (e.g., a floppy disk), and an optical disk drive for reading from and writing into a detachable non-volatile optical disk. In such cases, each drive may be connected to a bus (not shown) via one or more data medium interfaces. The memory 1120 may include a computer program product 1125 having one or more program modules which are configured to perform various methods or acts according to various embodiments of the present disclosure.

The communication unit 1140 implements communication with another computing device via the communication medium. In addition, the functionalities of components in the electronic device 1100 may be implemented by a single computing cluster or a plurality of computing machines that can communicate with each other via communication connections. Thus, the electronic device 1100 may operate in a networked environment using a logic connection with one or more other servers, network personal computers (PCs), or further general network nodes.

The input device 1150 may include one or more of a variety of input devices, such as a mouse, keyboard, trackball and the like. The output device 1160 may be one or more output devices, such as a display, loudspeaker, printer and the like. By means of the communication unit 1140, the electronic device 1100 may further communicate with one or more external devices (not shown) such as storage devices and display devices, one or more devices that enable the user to interact with the electronic device 600, or any devices (such as a network card, a modem and the like) that enable the electronic device 1100 to communicate with one or more other computing devices, if required. Such communication may be performed via input/output (I/O) interfaces (not shown).

According to example implementations of the present disclosure, there is provided a computer-readable storage medium with computer-executable instructions stored thereon, where the computer-executable instructions are executed by a processor to realize the methods described above. According to example implementations of the present disclosure, there is further provided there is provided a computer program product tangibly stored on a non-transient computer-readable medium and comprising computer-executable instructions which are executed by a processor to realize the methods described above.

Aspects of the present disclosure are described herein with reference to flowchart illustrations and/or block diagrams of methods, apparatus (systems), and computer program products according to implementations of the present disclosure. It will be understood that each block of the flowchart illustrations and/or block diagrams, and combinations of blocks in the flowchart illustrations and/or block diagrams, can be implemented by computer-readable program instructions.

These computer readable program instructions may be provided to a processing unit of a general-purpose computer, special-purpose computer, or other programmable data processing apparatus to produce a machine, such that when the instructions are executed via the processor of the computer or other programmable data processing apparatus, means for implementing the functions/acts specified in the flowchart and/or block diagram block or blocks are generated. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods and computer program products according to various implementations of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various implementations of the present disclosure have been presented for purposes of illustration, but are not intended to be exhaustive or limited to implementations disclosed. Many modifications and variations will be apparent to those of ordinary skill in the art without departing from the scope and spirit of the described implementations. The terminology used herein was chosen to best explain the principles of implementations, the practical application or technical improvement over technologies found in the marketplace, or to enable others of ordinary skill in the art to understand implementations disclosed herein.

Various example embodiments of the techniques have been described. In addition to or as an alternative to the above, the following examples are described. The features described in any of the following examples may be utilized with any of the other examples described herein.

In some aspects, an apparatus for reposting a post comprises: a comment generating module configured to, in response to the post being reposted by a second user, generate a repost comment related to reposting of the second user for presenting in a comment area; and an indication presenting module configured to present, in a user interface for presenting the post, a first indication that the second user reposted the post.

In some embodiments, the apparatus further comprises: a jump module configured to, in response to a first predetermined operation of the second user on the first indication, jump to the comment area to display the repost comment.

In some embodiments, the apparatus further comprises: a comment adding module configured to present, in the user interface, an interface element for adding a repost comment for the second user to add a repost comment related to the repost.

## Claims

1. A method of presenting a post, comprising:
receiving, from a first user, a request for presenting a comment area for the post; and
presenting the comment area, wherein if the post is reposted, the comment area comprises at least one repost comment related to reposting of the post.

2. The method of claim 1, wherein presenting the comment area comprises:
presenting a first comment area dedicated to displaying the at least one repost comment; and
presenting a second comment area dedicated to displaying regular comments for the post,
the first and second comment areas being separate from each other.

3. The method of claim 1, wherein the at least one repost comment comprises at least one of:
user input content for the reposting of the post, or
a default repost comment generated without a user input.

4. The method of claim 3, wherein the default repost comment has at least one of the following attributes:
non-reply, or
non-count in the number of comments on the post.

5. The method of claim 1, wherein an initiator of the at least one repost comment has an association with the first user

6. The method of claim 1, wherein presenting the comment area comprises:
in response to determining that the comment area comprises a plurality of repost comments, ranking the plurality of repost comments based on at least one of:
a repost comment including or excluding user input content, or
the intimacy between a related user of a repost comment and the first user

7. A method of reposting a post, comprising:
in response to the post being reposted by a second user, generating a repost comment related to reposting of the second user for presenting in a comment area; and
presenting, in a user interface for presenting the post, a first indication that the second user reposted the post.

8. The method of claim 7, further comprising:
presenting, in the user interface, a second indication that at least a third user reposted the post, the second and third users having an association.

9. The method of claim 7, further comprising:
in response to a first predetermined operation of the second user on the first indication, jumping to the comment area to display the repost comment.

10. The method of claim 7, further comprising:
presenting, in the user interface, an interface element for adding a repost comment for the second user to add a repost comment related to the reposting.

11. The method of claim 10, further comprising:
in response to a second predetermined operation of the second user on the interface element, presenting an interface area for inputting comments.

12. The method of claim 11, further comprising:
in response to a third predetermined operation of the second user on a emoticon sequence in the interface area, presenting at least one additional emoticon,
the last emoticon in the emoticon sequence being incompletely displayed.

13. An apparatus for presenting a post, comprising:
a request receiving module configured to receive, from a first user, a request for presenting a comment area for the post; and
a comment presenting module configured to present the comment area, wherein if the post is reposted, the comment area comprises at least one repost comment related to reposting of the post.

14. The apparatus of claim 13, wherein the comment presenting module is further configured to:
present a first comment area dedicated to displaying the at least one repost comment; and
present a second comment area dedicated to displaying regular comments for the post,
the first and second comment areas being independent from each other.

15. The apparatus of claim 13, wherein the at least one repost comment comprises at least one of:
user input content for the reposting of the post,
a default repost comment generated without a user input.

16. An apparatus for presenting a post, comprising:
a comment generating module configured to, in response to the post being reposted by a second user, generate a repost comment related to reposting of the second user for presenting in a comment area; and
an indication presenting module configured to present a first indication that the second user reposted the post, in a user interface for presenting the post.

17. The apparatus of claim 16, further comprising:
a jump module configured to, in response to a first predetermined operation of the second user on the first indication, jump to the comment area to display the repost comment.

18. The apparatus of claim 16, further comprising:
a comment adding module configured to present, in the user interface, an interface element for adding a repost comment for the second user to add a repost comment related to the repost.

19. An electronic device, comprising:
at least one processing unit; and
at least one memory coupled to the at least one processing unit and storing instructions to be executed by the at least one processing unit, the instructions, when executed by the at least one processing unit, causing the device to perform a method according to any of claims 1-6 or claims 7-12.

20. A computer-readable storage medium storing a computer program thereon, the program, when executed by a processor, performing a method according to any of claims 1-6 or claims 7-12.
